# EUROPEAN PATENT APPLICATION

(11) **EP 4 191 035 A1**
(43) Date of publication of application: **07.06.2023**
(21) Application number: 21212033.1
(22) Date of filing: 02.12.2021
(51) Int. Cl.: F02B 19/10, F02B 19/14, F02M 23/00

(54) **A LARGE ENGINE**

(71) Applicant: Winterthur Gas & Diesel AG, 8401 Winterthur (CH)
(72) Inventor: Bellucci, Valter, 5507 Mellingen (CH)
(74) Representative: IPS Irsch AG

(57) **Abstract**

A large engine is proposed, with at least one cylinder (1), in which a piston (3) is arranged for a reciprocating movement along a cylinder axis (A) between a top dead center position and a bottom dead center position, wherein the cylinder (1) comprises a cylinder cover (2), wherein the piston (3) comprises a top side (31), wherein the cylinder cover (2) and the top side (31) of the piston (3) delimit a combustion chamber for the combustion of a fuel, and wherein a cavity (6; 7), which opens out into the combustion chamber (4), is provided in the cylinder cover (2). The cavity (6; 7) is configured as a resonance absorber to dampen a resonance frequency of the combustion chamber (4).

## Description

The invention relates to a large engine according to the preamble of the independent patent claim.

Large engines may be configured as large diesel engines, which are usually operated with self-ignition of the fuel, or as large Otto engines, which are usually operated with induced ignition, e.g. spark ignition or pilot ignition. Furthermore, large engines are known, which are operated in a mixed mode, i.e. with both self-ignition of a fuel and induced ignition of a fuel.

Large engines, which can be designed as two-stroke or four-stroke engines, for example as longitudinally scavenged two-stroke large diesel engines, are often used as drive units for ships or in stationary operation, e.g. to drive large generators for generating electrical energy. The engines usually run for considerable periods in continuous operation, which places high demands on operational safety and availability. As a consequence, particularly long maintenance intervals, low wear and an economical handling of the operating materials are central criteria for the operator. Large engines typically have cylinders, which inner diameter (bore) is at least 200 mm. Nowadays, large engines with a bore of up to 960 mm or even more are used. Within the framework of this application the term "large engine" designates an internal combustion engine with a bore of the cylinder(s), which is at least 200 mm and preferably at least 300 mm.

Large diesel engines are classically operated with heavy fuel oil. Under the aspects of economic and efficient operation, compliance with exhaust-gas limit values and the availability of resources, alternatives to the fuel heavy fuel oil are now also being sought for large diesel engines. In this respect, both liquid fuels are used, i.e. fuels that are introduced into the combustion chamber in the liquid state, and gaseous fuels, i.e. fuels that are introduced into the combustion chamber in the gaseous state.

Examples of liquid fuels as known alternatives to heavy fuel oil are other heavy hydrocarbons, which are particularly left over as residues from oil refining, alcohols, in particular methanol or ethanol, gasoline, diesel, or also emulsions or suspensions. For example, it is known to use emulsions known as MSAR (Multiphase Superfine Atomized Residue) as fuel. A well-known suspension is that of coal dust and water, which is also used as fuel for large engines. As gaseous fuels, natural gases such as LNG (liquefied natural gas), liquefied gases such as LPG (liquefied petroleum gas) or ethane are known.

In particular, large diesel engines are also known which can be operated with at least two different fuels, whereby the engine is operated either with one fuel or with the other fuel depending on the operating situation or the environment.

One example of a large diesel engine that can be operated with two different fuels is a large diesel engine, which is configured as a dual-fuel large diesel engine. This engine can be operated in a liquid mode in which a liquid fuel is introduced into the cylinder for combustion and in a gas mode in which a gas is introduced into the cylinder as fuel.

Large diesel engines, which can be operated with at least two or even more different liquid or gaseous fuels, are often operated in different operating modes depending on the fuel currently in use. In the operating mode often referred to as diesel operation, the combustion of the fuel generally takes place according to the principle of compression ignition or self-ignition of the fuel. In the mode often referred to as Otto operation, combustion takes place by induced ignition of an ignitable pre-mixed air-fuel mixture. This induced ignition can take place, for example, by an electrical spark, e.g. with a spark plug, or also by the self-ignition of a small injected amount of fuel, which then causes the induced ignition of another fuel. The small amount of fuel intended for self-ignition is often injected into a prechamber connected to the combustion chamber.

Furthermore, mixed forms using both Otto and diesel operation are also known.

Within the framework of this application, the term "large diesel engine" refers to such engines, which can be operated at least in a diesel operation. In particular, the term "large diesel engine" thus also comprises such dual-fuel large engines that can be operated in another mode, e.g. Otto operation, in addition to diesel operation.

Thus, the term "large engine" comprises large diesel engines (as explained hereinbefore), large Otto engines, i.e. large engines, which can be operated only with Otto operation, e. g. a large gas engine operated with a gaseous fuel, and large engines, which can be operated in a mixed mode. The mixed mode is a mode where the engine is operated concurrently with diesel and Otto operation.

Within the framework of this application, the term "gas mode" or "operation in gas mode" refers to using only the gas or gaseous fuel for torque-generating combustion as fuel. As already mentioned, it is possible and quite common that in the gas mode for the induced ignition of the pre-mixed air-fuel mixture a small amount of a self-igniting liquid fuel, e.g. heavy fuel oil, is injected to carry out the induced ignition, but nevertheless the combustion process which generates the torque is operated completely with the gas or the gaseous fuel.

This process of induced ignition by self-ignition of a small amount of a liquid fuel is sometimes referred to as pilot injection. This pilot injection has nothing to do with the injection of the liquid fuel into the combustion chamber when the large engine is operated in liquid mode. A different injection device is usually, but not necessarily, used for the pilot injection than for the injection of the liquid fuel in the liquid mode. In addition, in pilot injection, the small amount of the liquid fuel is also frequently not injected directly into the combustion chamber, but into at least one prechamber that is connected to the combustion chamber via a channel.

In particular in the gas mode, with regard to an economical, efficient and low-pollution operation, it is very important to avoid abnormal combustion processes, which occur in particular when the ratio of scavenging air to gas, i.e. the air-fuel ratio, is not within a certain range.

If the gas content is too high, the air-fuel mixture becomes too rich. The combustion of the mixture takes place too fast or too early, for example by self-ignition, which can lead to the knocking of the engine. If the air content is too high, the air-fuel mixture is too lean and misfiring can occur, which of course also has a negative effect on the efficient and low-pollution operation of the engine. In particular, these two states of too high gas content and too high air content are designated as abnormal combustion processes. Thus, in the gas mode one strives for a combustion process without self-ignition of the air-gas mixture. The combustion process shall take place between the limits where the air-gas mixture is neither too rich nor too lean

Since the combustion process in particular in the gas mode is very sensitive to the air-fuel ratio, it is very difficult or even impossible to completely avoid the effect of knocking which is usually caused by an air-gas mixture that is too rich. A mixture that is too rich can lead to various problems, namely that the combustion takes place too fast (fast combustion), or that the engine begins to knock because the mixture in the cylinder or at least a part of the mixture begins to combust (pre-ignition) too early (related to the working cycle) by self-ignition. The premature combustion of a part of the compressed air-gas mixture by an undesired self-ignition causes strong pressure oscillations around the average cylinder pressure. These pressure oscillations are detrimental to the engine, result in an increased mechanical load of different components of the engine and can considerably limit the engine operation, e.g. in view of an economical, efficient and low-pollution operation of the engine.

Starting from this state of the art, it is therefore an object of the invention to propose a large engine, which is less sensitive to knocking. Thus, if knocking occurs, the detrimental effects of knocking shall be considerably reduced.

The subject matter of the invention satisfying this object is characterized by the features of the independent patent claim.

Thus, according to the invention, a large engine is proposed, with at least one cylinder, in which a piston is arranged for a reciprocating movement along a cylinder axis between a top dead center position and a bottom dead center position, wherein the cylinder comprises a cylinder cover, wherein the piston comprises a top side, wherein the cylinder cover and the top side of the piston delimit a combustion chamber for the combustion of a fuel, and wherein a cavity, which opens out into the combustion chamber, is provided in the cylinder cover. The cavity is configured as a resonance absorber to dampen a resonance frequency of the combustion chamber.

It has been found that a knocking event occurring in the cylinder, e.g. by the premature self-ignition of at least a part of a compressed air-gas mixture, causes pressure oscillations having a pronounced maximum in quite a narrow frequency range. If the maximum of the frequency, which is for example in the region of 1000 -1500 Hz, coincides or is close to an eigenfrequency of the combustion chamber, the amplitude of the pressure oscillation is considerably increased due to resonance effects. By providing the cavity, which is configured as a resonance absorber for damping the resonance frequency of the combustion chamber, the energy associated with the pressure pulsations caused by the knocking event is strongly dissipated, so that the detrimental effects of the knocking event are considerably reduced.

Since the geometry of the combustion chamber is known or can be measured, the resonance frequencies of the combustion chamber can be determined with quite low efforts, for example by calculations and/or by experimental measures such as pressure measurements.

Thus, the cavity configured as the resonance absorber is matched to a resonance frequency of the combustion chamber, which is at or close to the maximum in the frequency spectrum of a knocking event in the combustion chamber, so that the pressure oscillation at this resonance frequency is remarkably attenuated or even completely suppressed. The resonance frequency or the resonance frequencies of the combustion chamber may be determined by an acoustic analysis of the system that may be performed by measurements and/or by calculations and/or by simulations. Once the resonance frequency of the combustion chamber is known, the resonance absorber may be designed and configured in such a manner that it dampens the pressure pulsations at this resonance frequency. The resonance absorber is configured to dampen the resonance frequency, which is excited by a knocking event occurring in the cylinder.

Of course, it is also possible that a plurality of cavities is provided, each of which is configured as a resonance absorber for damping a resonance frequency of the combustion chamber.

It is preferred that the resonance absorber is configured to dampen the resonance frequency of the combustion chamber with the piston being at or near the top dead center position. Accordingly, the resonance frequency of the combustion chamber is determined for a piston position, in which the piston is in or close to the top dead center position. Since the geometry of the combustion chamber changes with the movement of the piston, it is advantageous to determine the resonance frequencies of the combustion chamber for that position of the piston, where the regular combustion should start. Typically, this is a position, where the piston is close to the top dead center position during the compression stroke of the piston. In praxis, it has proven advantageous that the resonance absorber is configured to dampen a tangential mode of the combustion chamber. Particularly, the resonance absorber is configured to dampen the first tangential mode.

Preferably, the resonance absorber is configured as a Helmholtz resonator having a resonator volume and a resonator neck connected with the resonator volume, wherein the resonator neck is in fluid communication with the combustion chamber. The Helmholtz resonator works according to a mass-spring system, wherein the mass is represented by the gas in the resonator neck and the spring is represented by the gas in the resonator volume. Therefore, the eigenfrequency of the Helmholtz resonator depends on the geometry of the resonator neck and the volume of the resonator volume. Thus, it is quite easy to match the eigenfrequency of the Helmholtz resonator to the resonance frequency of combustion chamber.

According to a preferred embodiment the cavity is configured to receive a start air valve for supplying pressurized starting air to the combustion chamber. Thus, it is preferred to configure at least one of the cavities, which are anyway provided at the cylinder cover, as the resonance absorber. In this embodiment it is the cavity, in which the start air valve for starting the large engine is arranged. The volume of the cavity between the start air valve and the combustion chamber does not underly strong functional restrictions. Therefore, it is quite simple to configure the cavity receiving the start air valve as the resonance absorber.

Furthermore, it is a preferred embodiment that the cavity is configured as a prechamber for a pilot combustion, which initiates the combustion in the combustion chamber. Since in many large engines, particularly in large engines which are operable in a gas mode, at least one prechamber is provided in the cylinder cover, it is advantageous to configure said prechamber as the resonance absorber to dampen the resonance frequency of the combustion chamber. Even if the prechamber is configured according to the combustion requirements, for example regarding the volume and the duration of the hot jet generated by the pilot injection, there are still sufficient free parameters regarding the geometry of the prechamber to configure the prechamber as the resonance absorber.

Preferably, the pilot combustion initiates the combustion of an air-gas mixture in the combustion chamber. Thus, the pilot combustion is preferably used when the large engine is operated in a gas mode.

Furthermore, it is preferred that the prechamber is configured to receive a liquid fuel for a self-ignition of the pilot combustion. Alternatively, the pilot combustion could be ignited by means of a spark.

According to a preferred embodiment the prechamber comprises a main volume for the pilot combustion and a tubular volume for connecting the main volume with the combustion chamber. The main volume may be configured as the resonator volume of a Helmholtz resonator and the tubular volume may be configured as the resonator neck of the Helmholtz resonator.

According to another preferred embodiment the prechamber is configured as a two-volume Helmholtz resonator having a first resonator volume, a second resonator volume, a first resonator neck and a second resonator neck, wherein the first resonator neck connects the first resonator volume with the second resonator volume, and wherein the second resonator neck is connected with the second resonator volume. In this configuration the main volume for the pilot combustion may constitute the first resonator volume. The main volume is connected by a channel to a smaller volume, which is for example approximately spherical, and which constitutes the second resonator volume. The channel connecting the main volume with the smaller volume constitutes the first resonator neck. The smaller volume is connected to the combustion chamber by an exit, which constitutes the second resonator neck.

Therefore, it is preferred regarding this embodiment, that the main volume is the first resonator volume, wherein the tubular volume comprises the second resonator neck.

Preferably, the large engine is configured as a large diesel engine.

Particularly preferred, the large engine is configured as a longitudinally scavenged two-stroke large diesel engine.

Preferably, the large engine is configured as a dual-fuel large diesel engine, which can be operated in a liquid mode, in which a liquid fuel is introduced into the combustion chamber for combustion, and which can further be operated in a gas mode, in which a gas is introduced as fuel into the cylinder.

Further advantageous measures and embodiments of the invention result from the dependent claims.

In the following, the invention is explained in more detail on the basis of embodiments and referring to the drawing. In the drawing show:
- Fig. 1:: a schematic representation of a cylinder of an embodiment of a large engine according to the invention,
- Fig. 2:: a frequency spectrum of a knocking event in the cylinder,
- Fig. 3:: a cross-sectional view of a prechamber of the cylinder shown in Fig. 1,
- Fig. 4:: a schematic representation of an embodiment of the prechamber configured as a Helmholtz resonator, and
- Fig. 5:: a schematic representation of an embodiment of the prechamber configured as a two-volume Helmholtz resonator.

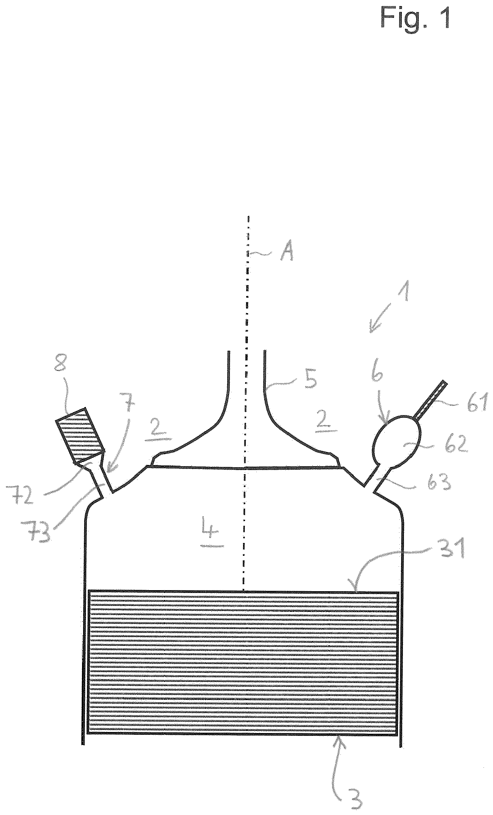

Fig. 1 shows in a schematic representation a cylinder of an embodiment of a large engine according to the invention. The cylinder is designated in its entity with reference numeral 1. The cylinder 1 is part of a large engine having a plurality of cylinders 1. The large engine may have up to twelve or even up to fourteen cylinders 1. The large engine is for example configured as a longitudinally scavenged two-stroke large diesel engine.

The cylinder 1 comprises a cylinder cover 2, in which an exhaust valve 5 is provided for discharging the exhaust gas from the cylinder 1. In the cylinder 1 a piston 3 is arranged for a reciprocating movement along a cylinder axis A between a top dead center position and a bottom dead center position. The piston 3 has a top side 31, which delimits together with the cylinder cover 2 and a cylinder wall or a cylinder liner of the cylinder 1 a combustion chamber 4, in which the combustion of a fuel takes place.

The term "large engine" refers to such internal combustion engines that are usually used as drive units for ships or in stationary operation, e.g. to drive large generators for generating electric energy. Typically, the cylinders 1 of a large engine each have an inner diameter (bore) of at least 200 mm. The term "longitudinally scavenged" means that the scavenging or charging air is introduced into the cylinder 1 in the area of the lower end and the exhaust valve 5 is arranged in or at a cylinder cover 2 located at the upper end of the cylinder 1.

In the following description of the invention, reference is made to a large diesel engine as an example for a large engine. It has to be noted that the invention is not restricted to large diesel engines but also comprises other types of large internal combustion machines, for example Otto engines that can be operated only with Otto operation such as large gas engines, which are operated e.g. with LNG.

The large diesel engine is designed as a dual-fuel large diesel engine, i.e. an engine which can be operated with two different fuels. In particular, the dual-fuel large diesel engine can be operated in a liquid mode in which only a liquid fuel is injected into the combustion chamber 4 of the cylinder 1. Usually the liquid fuel, for example heavy fuel oil or a diesel oil, is injected directly into the combustion chamber 4 at a suitable time and ignites there according to the diesel principle of self-ignition.

The large diesel engine can also be operated in a gas mode, in which a gas serving as fuel, for example a natural gas such as LNG (Liquefied Natural Gas) or LPG (Liquefied Petroleum Gas) or ethane, is ignited in the combustion chamber in the form of a premixed air-fuel mixture. Preferably, the large diesel engine operates in gas mode according to a low-pressure process, i.e. the gas is introduced into the cylinder 1 in the gaseous state, whereby the injection pressure of the gas is at most 50 bar, preferably at most 20 bar, even more preferred at most 16 bar, and particularly preferred at most about 10 bar. The air-gas mixture is induced ignited in the combustion chamber 4 according to the Otto principle. This induced ignition is usually caused by introducing a small amount of self-igniting liquid fuel (e.g. diesel or heavy fuel oil) into a prechamber 6 at a suitable moment, which fuel then ignites itself and causes the induced ignition of the air-fuel mixture in the combustion chamber 4. In other embodiments the induced ignition is made by way of a spark ignition.

Within the framework of this application, as already explained above, the term "gas mode" or "operation in gas mode" is to be understood such that the large diesel engine is operated only with gas or with a gaseous fuel in this gas mode, wherein optionally a small amount of a self-igniting fuel, e.g. heavy fuel oil or diesel oil, is introduced into the prechamber 6 or a plurality of prechambers 6 merely for the induced ignition of the air-gas mixture (pilot injection). The self-ignited combustion in the prechamber 6 is referred to as pilot combustion.

Furthermore, the dual-fuel large diesel engine can be operated in a mixed mode, in which both liquid fuel and gaseous fuel are injected into the cylinder 1. In the mixed mode both the combustion of the self-igniting liquid fuel and the combustion of the induced ignited gaseous fuel contribute to the generation of the torque. For example, if the dual-fuel large diesel engine is operated in the gas mode and the required torque cannot be generated only with a high quality combustion of the gaseous fuel, an additional amount of liquid fuel is injected into the cylinder 1 and combusted to additionally generate a torque such that the required torque is reached.

Since large engines such as large diesel engines are well known in the art, there is no need for a detailed description. Furthermore, reference is made by way of example to the application that the large diesel engine is the main propulsion unit of a ship or a vessel.

As it is known in the art, the piston 3 is connected to a crosshead (not shown) via a piston rod (not shown), which crosshead is connected to a crankshaft (not shown) via a push rod or connecting rod (not shown) so that the movement of the piston is transmitted via the piston rod, the crosshead and the connecting rod to the crankshaft to rotate it.

In the gas mode, the fuel for the combustion is a gas. In the low-pressure process, for example, the gas is introduced into the cylinder 1 through the cylindrical wall, i.e. the lateral area of the respective cylinder 1 or through the cylinder liner, preferably approximately in the middle between the top and bottom dead center position of the piston 3 movement. In the cylinder 1, the gas mixes with the scavenging air during the compression movement of the piston 3 and thus forms an ignitable air-fuel mixture which is then induced ignited when the piston 3 is approximately at the top dead center position. The induced ignition is preferably achieved by injecting a self-igniting fuel, e.g. heavy fuel oil or a diesel fuel, into the prechamber 6 of the cylinder. The pilot injection, i.e. the injection of the liquid fuel in gas mode, which serves only for the induced ignition of the air-gas mixture in the combustion chamber 4, is preferably carried out by means of one or more pilot injection nozzles 61 which are different from the main injection nozzle or main injection nozzles with which the liquid fuel is injected into the combustion chamber 4 in the liquid mode.

In other embodiments the induced ignition may be caused by a spark ignition, e.g. by electrically generating a spark for the ignition of the air-fuel mixture.

The prechamber 6 for the pilot combustion is configured as a cavity in the cylinder cover 2, with the cavity opening out into the combustion chamber 4. The prechamber 6 comprises a main volume 62 in which the pilot combustion takes place, as well as a tubular volume 63 connecting the main volume 61 with the combustion chamber 4.

During operation in the gas mode the air-gas mixture in the combustion chamber 4 is induced ignited. For the induced ignition of the air-gas mixture a small amount of a self-igniting fuel is injected with the pilot injection nozzle 61 into the main volume 62 of the prechamber 6, where the fuel self-ignites for the pilot combustion. The generated hot jet is guided by the tubular volume 63 to the combustion chamber 4 and ignites the air-gas mixture in the combustion chamber 4. Preferably, the fuel for the pilot combustion in the main volume 62 of the prechamber 6 is the same self-igniting fuel which is used for the combustion in the combustion chamber 4 during the liquid mode, for example heavy fuel oil or a diesel oil.

In liquid mode, only the liquid fuel is injected into the combustion chamber 4 of the cylinder. Usually, the liquid fuel is injected directly into the combustion chamber at a suitable time and ignites there according to the diesel principle of self-ignition.

In liquid mode, the liquid fuel is supplied to the combustion chamber 4 by means of the main injection nozzles. As an option, it is possible to additionally introduce liquid fuel through the pilot injection nozzle 61 in the liquid mode. However, this optional measure mainly serves to prevent the pilot injection nozzle 61 from clogging up or becoming blocked, because the maximum fuel flow through the pilot injection nozzle 61 is far too low to operate the large diesel engine in liquid mode only with it.

The structure and the individual components of a large diesel engine, such as the injection system for the liquid mode, the gas supply system for the gas mode, the gas exchange system, the exhaust system or the turbocharger system for the supply of the scavenging or charging air, as well as the monitoring and control system for a large diesel engine are sufficiently known to the person skilled in the art both for the design as a two-stroke engine and for the design as a four-stroke engine and therefore need no further explanation here.

In the embodiment of a longitudinally scavenged two-stroke large diesel engine described here, scavenging air slots are usually provided in the lower region of each cylinder 1 or cylinder liner, which are periodically closed and opened by the movement of the piston 3 in the cylinder, so that the scavenging air provided by the turbocharger under a charging pressure can flow into the cylinder 1 through the scavenging air slots as long as they are open. In the cylinder cover 2 the usually centrally arranged exhaust valve 5 is provided, through which the exhaust gases can be discharged from the cylinder 1 into the exhaust system after the combustion process. The exhaust system guides at least a part of the exhaust gases to a turbine of the turbocharger, whose compressor provides the scavenging air, which is also referred to as charging air, in an intake receiver under the scavenge air pressure. The intake receiver is in fluid communication with the scavenging air slots of the cylinders.

For the introduction of the liquid fuel into the combustion chamber 4 during the liquid mode, the one or the more main injection nozzles (not shown) are provided, which are arranged in the cylinder cover 2 near the exhaust valve 5, for example. For the gas supply during gas mode, the gas supply system (not shown) is provided which comprises at least one gas inlet valve with a gas inlet nozzle. Typically, the gas inlet nozzle is provided in the wall of the cylinder, for example at a height approximately in the middle between the top and bottom dead center of the piston.

The monitoring and control system in modern large diesel engines is an electronic system with which usually all engine or cylinder functions, in particular the injection (start and end of the injection) and the activation of the outlet valve, can be set or controlled or regulated.

Furthermore, the cylinder 1 comprises a cavity 7 provided in the cylinder cover 2 and opening out into the combustion chamber 4. In the cavity 7 a start air valve 8 is arranged for supplying pressurized starting air to the combustion chamber 4. The starting of a large engine such as a large diesel engine is usually performed by injecting compressed air into the cylinders 1 in order to move the pistons 3 downward and thus starting the crankshaft to rotate. The so-called starting air is provided consecutively to the cylinders 1 according to the firing sequence of the engine, whereas the injection of compressed starting air into the combustion chamber 4 of the respective cylinder 1 is initiated each time, when the piston 3 is at the top dead center position or has just passed it.

According to the invention at least one of the cavities 7, 6 opening out into the combustion chamber 4, for example the cavity 7 for the start air valve 8 or the cavity forming the prechamber 6, is configured as a resonance absorber to dampen a resonance frequency of the combustion chamber 4.

Preferably, the resonance absorber is configured to dampen the resonance frequency of the combustion chamber 4, which is at or near the maximum in the frequency spectrum of a knocking event occurring in the cylinder 1. Such a knocking event is for example caused by an undesired and premature self-ignition of the air-gas mixture or a part thereof during operation in the gas mode. It may happen that during the compression stroke of the piston 3 the compressed air-gas mixture in the cylinder 1 at least partially ignites by self-ignition. Such a knocking event causes strong pressure oscillations about the mean cylinder pressure prevailing in the combustion chamber 4 of the cylinder 1.

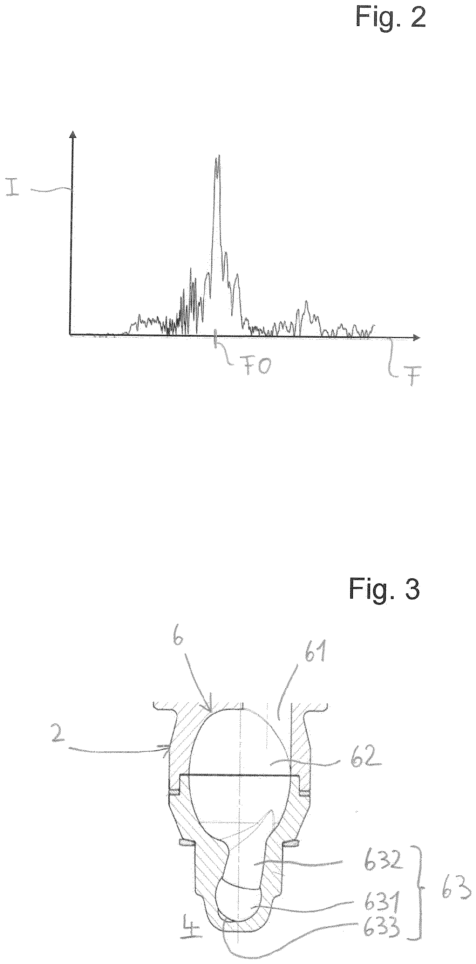

Fig. 2 shows a typical frequency spectrum of a knocking event in the cylinder 1. On the horizontal axis the frequency F is plotted and on the vertical axis the intensity I is plotted. It can be seen that a pronounced maximum exists at a frequency F0. If said frequency F0 coincides or is close to a resonance frequency of the combustion chamber 4, particularly when the piston 3 is in the vicinity of the top dead center position, the pressure oscillations in the combustion chamber are considerably increased due to resonance effects. A typical value for the frequency F0 is in the region of one kHz. F0 is for example between 900 Hz and 1500 Hz.

The cavity 7 and/or the prechamber 6 are configured to dampen that resonance frequency of the combustion chamber 4, which is at or close to the frequency F0 where the maximum of the frequency spectrum of the knocking event is located. The sound caused by a knocking event can be recorded and analyzed so that the frequency F0 can be determined.

Preferably, the cavity 7 and/or the prechamber 6 are configured as a Helmholtz resonator having a resonator volume and a resonator neck connected with the resonator volume.

When the prechamber 6 is configured as a Helmholtz resonator, the main volume 62 of the prechamber 6 constitutes the resonator volume and the tubular volume 63 of the prechamber 6 constitutes the resonator neck of the Helmholtz resonator.

When the cavity 7 receiving the start air valve 8 is configured as a Helmholtz resonator, a tapering volume 72 of the cavity 7 adjacent to the start air valve 8 constitutes the resonator volume and a tubular channel 73 of the cavity 7, which connects the tapering volume 72 with the combustion chamber 4 constitutes the resonator neck of the Helmholtz resonator.

In the following description reference is made to the prechamber 6 configured as a Helmholtz resonator. It has to be understood that these explanations are also valid in the same manner or in an analogous manner for the cavity 7 configured as a Helmholtz resonator. In some embodiments of the large engine only the prechamber 6 of the cylinder 1 is configured as a Helmholtz resonator for damping a resonance frequency of the combustion chamber 4. In other embodiments of the large engine only the cavity 7 is configured as a Helmholtz resonator for damping a resonance frequency of the combustion chamber 4. In still other embodiments of the large engine both the prechamber 6 and the cavity 7 are each configured as a Helmholtz resonator for damping a resonance frequency of the combustion chamber 4.

The basic principle of the Helmholtz resonator 6, 7 as such is well known in the art. Helmholtz resonators are used for example as silencer for noise protection or noise reduction. The Helmholtz resonator 6, 7 works as a vibration absorber according to the principle of a mass-spring system. The mass of this system is represented by the gas in the resonator neck, e.g. the tubular volume 63, or the tubular channel 73, respectively. The spring is represented by the gas in the resonator volume, e.g. the main volume 62 or the tapering volume 72, respectively. Thus, by adjusting the volume of the resonator volume and/or the geometry of the resonator neck, the eigenfrequency of the Helmholtz resonator 6, 7 may be tuned to a predefined or desired value, such as a resonance frequency of the combustion chamber 4 with the piston 3 being at or near the top dead center position.

The eigenfrequency of the Helmholtz resonator 6, 7 is adjusted to correspond to the resonance frequency of the combustion chamber 4, which is at or close to the frequency F0, at which the maximum in the pressure pulsations caused by a knocking event occurs. The pressure pulsation at this eigenfrequency of the Helmholtz resonator 6, 7 is considerably damped.

Fig. 3 shows a cross-sectional view of an embodiment of the prechamber 6 of the cylinder 1 shown in Fig. 1 in more detail. The prechamber 6 comprises the main volume 62, in which the pilot injection nozzle 61 injects the liquid fuel for the pilot combustion, as well as the tubular volume 63, which connects the main volume 62 to the combustion chamber 4. The tubular volume 63 comprises a spherical volume 631, a channel 632 and an exit 633, wherein the channel 632 connects the main volume 62 with the spherical volume 631 and the exit 633 connects the spherical volume 631 with the combustion chamber 4.

The configuration of the prechamber 6 comprising the main volume 62 for the pilot combustion, the channel 632, the spherical volume 631 and the exit 633 renders possible to optimize the prechamber 6 with respect to the combustion requirements, so that the hot jet generated by the pilot combustion in the main volume 62 of the prechamber 6 efficiently and reliably ignites the air-gas mixture in the combustion chamber 4 during operation in the gas mode.

Nevertheless, there are still sufficient free parameters available to tune the eigenfrequency of the prechamber 6 designed as a Helmholtz resonator to the desired resonance frequency.

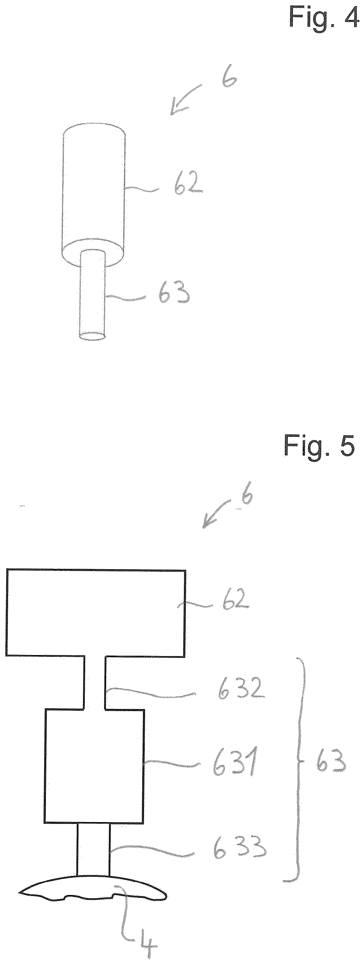

According to a first variant, which is illustrated in the schematic representation of Fig. 4, the prechamber 6 is considered as a simple Helmholtz resonator, wherein the main chamber 62 constitutes the resonator volume and the tubular volume 63 constitutes the resonator neck of the Helmholtz resonator. Without jeopardizing a reliable induced ignition of the air-gas mixture in the combustion chamber 4, the geometric dimensions of the prechamber 6 are varied as long as the eigenfrequency of the prechamber 6 corresponds to the desired resonance frequency that shall be dampened. Such calculations are easy to perform for a skilled person.

According to a second variant, which is illustrated in the schematic representation of Fig. 5, the prechamber 6 is considered as a two-volume Helmholtz resonator having a first resonator volume, a second resonator volume, a first resonator neck and a second resonator neck, wherein the first resonator neck connects the first resonator volume with the second resonator volume, and wherein the second resonator neck is connected with the second resonator volume. The main volume 62 of the prechamber 6 constitutes the first resonator volume, the spherical volume 631 constitutes the second resonator volume, the channel 632 constitutes the first resonator neck connecting the main volume 62 with the spherical volume 631, and the exit 633 constitutes the second resonator neck, which connects the spherical volume 631 to the combustion chamber 4. Also, for such a two-volume Helmholtz resonator the eigenfrequencies are quite simple to calculate for a given geometry.

## Claims

1. A large engine, with at least one cylinder (1), in which a piston (3) is arranged for a reciprocating movement along a cylinder axis (A) between a top dead center position and a bottom dead center position, wherein the cylinder (1) comprises a cylinder cover (2), wherein the piston (3) comprises a top side (31), wherein the cylinder cover (2) and the top side (31) of the piston (3) delimit a combustion chamber for the combustion of a fuel, and wherein a cavity (6; 7), which opens out into the combustion chamber (4), is provided in the cylinder cover (2), **characterized in that** the cavity (6; 7) is configured as a resonance absorber to dampen a resonance frequency of the combustion chamber (4).

2. A large engine in accordance with claim 1, wherein the resonance absorber is configured to dampen the resonance frequency of the combustion chamber (4) with the piston (3) being at or near the top dead center position.

3. A large engine in accordance with any one of the preceding claims, wherein the resonance absorber is configured to dampen a tangential mode of the combustion chamber (4).

4. A large engine in accordance with any one of the preceding claims, wherein the resonance absorber is configured as a Helmholtz resonator having a resonator volume (62, 72) and a resonator neck (63, 73) connected with the resonator volume (62, 72), and wherein the resonator neck (63, 73) is in fluid communication with the combustion chamber (4).

5. A large engine in accordance with any one of the preceding claims, wherein the cavity (7) is configured to receive a start air valve (8) for supplying pressurized starting air to the combustion chamber (4).

6. A large engine in accordance with any one of the preceding claims, wherein the cavity is configured as a prechamber (6) for a pilot combustion, which initiates the combustion in the combustion chamber (4).

7. A large engine in accordance with claim 6, wherein the pilot combustion initiates the combustion of an air-gas mixture in the combustion chamber (4).

8. A large engine according to any one of claims 6-7 wherein the prechamber (6) is configured to receive a liquid fuel for a self-ignition of the pilot combustion.

9. A large engine in accordance with any one of claims 6-8, wherein the prechamber (6) comprises a main volume (62) for the pilot combustion and a tubular volume (63) for connecting the main volume (62) with the combustion chamber (4).

10. A large engine in accordance with any one of claims 6-9, wherein the prechamber (6) is configured as a two-volume Helmholtz resonator having a first resonator volume, a second resonator volume, a first resonator neck and a second resonator neck, wherein the first resonator neck connects the first resonator volume with the second resonator volume, and wherein the second resonator neck is connected with the second resonator volume.

11. A large engine in accordance with claim 9 and with claim 10, wherein the main volume (62) is the first resonator volume, and wherein the tubular volume (63) comprises the second resonator neck.

12. A large engine in accordance with any one of the preceding claims configured as a large diesel engine.

13. A large engine in accordance with any one of the preceding claims configured as a longitudinally scavenged two-stroke large diesel engine.

14. A large engine in accordance with any one of the preceding claims configured as a dual-fuel large diesel engine, which can be operated in a liquid mode, in which a liquid fuel is introduced into the combustion chamber (4) for combustion, and which can further be operated in a gas mode, in which a gas is introduced as fuel into the cylinder (1).
